Europäisches Patentamt

European Patent Office

Office européen des brevets

(11) Publication number: **0 235 381 B1**

# EUROPEAN PATENT SPECIFICATION

(45) Date of publication of patent specification: **17.03.93** (51) Int. Cl.5: **C08F 210/02**, C08F 210/16

(21) Application number: **86117344.1**

(22) Date of filing: **12.12.86**

(54) **Ethylene-alpha-olefin copolymer rubbers.**

(30) Priority: **12.12.85 JP 279918/85**

(43) Date of publication of application:
**09.09.87 Bulletin 87/37**

(45) Publication of the grant of the patent:
**17.03.93 Bulletin 93/11**

(84) Designated Contracting States:
**DE FR GB IT NL**

(56) References cited:
**FR-A- 2 433 547**

(73) Proprietor: **SUMITOMO CHEMICAL COMPANY, LIMITED**
**Kitahama 4-chome 5-33**
**Chuo-ku Osaka 541(JP)**

(72) Inventor: **Takao, Hiroyoshi**
**7-16, Kurosunadai-3-chome**
**Chiba-shi(JP)**
Inventor: **Harada, Hiroyuki**
**1353-4, Shiizu**
**Ichihara-shi(JP)**

(74) Representative: **Vossius & Partner**
**Siebertstrasse 4 P.O. Box 86 07 67**
**W-8000 München 86 (DE)**

## Description

The present invention relates to ethylene-α-olefin copolymer rubbers. More particularly the invention relates to ethylene-α-olefin copolymer rubbers having a wide and specific molecular weight distribution, and excellent processability and physical properties.

It is known that ethylene-α-olefin copolymer rubbers show excellent characteristics in weather resistance, ozon resistance, heat resistance, etc.

As α-olefins, there are used mainly propylene or 1-butene, and the resulting copolymer rubbers are utilized as material for automobiles, constructions, industrial parts, electric wires, and resin modifiers by blending with resins.

The ethylene-α-olefin copolymer rubbers used for these purpose are required to have not only excellent physical properties but also good processability. It is well known that for a good processability, the rubbers are required to have a wide molecular weight distribution. For this purpose, there have been proposed polymers having a wide molecular weight distribution and a method for producing the same. However, in case where additives such as oils or the like are not added or added in a small portion, the processability, particularly extrusion processability is not satisfactory, so that good extrusion of surface and edges can not be obtained, even if the rubbers have a wide molecular weight distribution.

On the other hand, there has been proposed a process in which large amounts of plasticizers such as oils and the like are added to improve the processability. This has caused problems such as deterioration in physical properties due to the addition of large amounts of oils.

FR-A- 2 433 547 discloses the following rubbery copolymer:

A rubbery copolymer of ethylene, an α-olefin having 3 to 10 carbon atoms and a non-conjugated diene, characterized by having

a) an ethylene/α-olefin mole ratio of from 50/50 to 95/5,

b) an iodine value of from 5 to 50,

c) an intrinsic viscosity [$\eta$], measured in decalin at 135°C, of from 1.0 to 6.0 dl/g,

d) a weight average molecular weight/number average molecular weight ratio ($\overline{M}w/\overline{M}n$) of from 3 to 15, and

e) an iodine value index $\alpha_1$ for the lower molecular weight components and an iodine value index $\alpha_2$ for the higher molecular weight components, said $\alpha_1$ and $\alpha_2$ falling within the ranges $-30 \leq \alpha_1 \leq 0$ and $0 \leq \alpha_2 \leq 30$.

As a vanadium compound used for preparing said rubbery copolymer, there is recited a compound represented by the formula $VO(OR)_n X_{3-n}$, wherein R is a hydrocarbon group, which is a very broadly defined expression; cf. page 18, lines 1 to 33 of the document. Actual illustrations of R from the working examples are in fact $C_2H_5$, $n-C_4H_9$ and $n-C_3H_7$. Vanadium compounds actually used in the working examples are all those having a primary alcohol moiety, and no vanadium compound having a secondary alcohol moiety is used, as opposed to the present invention.

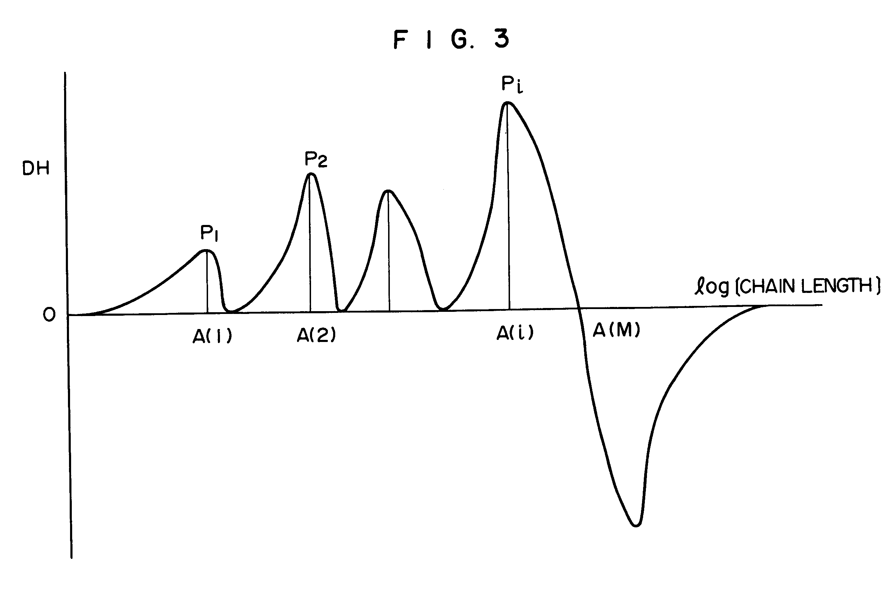

In the accompanying drawings, Fig. 1 illustrates one example of a differential curve of the molecular weight distribution curve of an ethylene-α-olefin copolymer rubber of this invention measured by GPC. Fig. 2 illustrates one example of a differential curve of the molecular weight distribution curve of an ethylene-α-olefin copolymer of the prior art measured by GPC. Fig. 3 shows a relation of peak characteristic numbers obtained from a molecular weight distribution curve in order to better explain this invention.

The purpose of this invention is to solve the problems as mentioned above and to provide ethylene-α-olefin copolymer rubbers having excellent processability and physical properties.

The present inventors have conducted various studies as to ethylene-α-olefin copolymer rubbers being excellent in processability and found that ethylene-α-olefin copolymer rubbers containing a specifically low molecular weight portion and exhibiting a characteristic molecular weight distribution curve show excellent processability and physical properties.

According to the present invention, there are provided ethylene-α-olefin copolymer rubbers which are characterized in that said copolymer rubbers comprise ethylene and an α-olefin having 3 to 6 carbon atoms or ethylene, an α-olefin having 3 to 6 carbon atoms and a non-conjugated polyene, the molar ratio of ethylene/α-olefin is 40/60 to 95/5, the non-conjugated polyene content being 0 to 25% by weight, the intrinsic viscosity measured in xylene at 70°C being 0.8 to 5.0 dl/g, and the Q value (weight average molecular weight/number average molecular weight) measured by GPC being 4 to 20, and the peak characteristic numbers I, P(i), A(i) and A(M) are in the range of A(M) > A(i), I ≧ 2 and 1.5 ≦ A(l) ≦ 3.0, respectively.

By using the ethylene-α-olefin copolymer rubbers of this invention, excellent processability such as roll processability and extrusion processability can be achieved while no or little amounts of plasticizers such as

2

oils and the like are added, and the resulting product exhibits good physical properties such as a high tensile strength.

The ethylene-α-olefin copolymer used in this invention can be a binary, ternary or multicomponent copolymer composed of ethylene and an α-olefin, or ethylene, an α-olefin and a non-conjugated polyene. These copolymers are hereinafter abbreviated to EPR.

As the α-olefin having 3 to 6 carbon atoms, which is one of the components of EPR of this invention, there may be illustrated propylene, 1-butene, 1-pentene, 1-hexene, 4-methyl-pentene-1 and mixtures thereof, among which propylene and 1-butene are specifically preferred.

Illustrative examples for the non-conjugated polyene are straight chain non-conjugated dienes such as 1,4-hexadiene, 1,6-octadiene, 5-methyl-1,4-hexadiene; cyclic non-conjugated dienes such as cyclohexadiene, dicyclopentadiene, methyltetrahydroindene, 5-vinylnorboronene, 5-ethylidene-2-norbornene, and 5-isopropylidene-2-norbornene; and trienes such as 2,3-isopropylidene-5-norbornene, 2-propenyl-2,2-norbornadiene and 1,3,7-octatrinene, among which dicyclopentadiene, 5-ethylidene-2-norbornene and 1,4-hexadiene are specifically preferred. These are used alone or in combinations.

The ratio of ethylene and α-olefin in EPR may be varied in a wide range, but in general, it may be selected within a range between 40/60 and 95/5 by mole so that the resulting copolymer will achieve a rubber like form.

For example, when the α-olefin is propylene, the ratio is preferably from 40/60 to 85/15. When the α-olefin is one having a carbon number of 4 or more, the ratio is preferably from 65/35 to 95/5, more preferably 75/25 to 95/5. These ratios can be determined by means of infrared spectrophotometry or by $^{13}$C-NMR.

The content of non-conjugated polyene in EPR may be varied in a wide range, but in general it is preferably 0 to 25% by weight in the copolymer. The content of the non-conjugated diene is calculated by the following equation:

$$\frac{\text{Amount of non-conjugated diene in polymer}}{\text{Amount of (ethylene + } \alpha\text{-olefin + non-conjugated diene) in polymer}} \times 100 \text{ (wt \%)}$$

The intrinsic viscosity of EPR of this invention may be within the range from 0.8 to 5.0 dl/g, preferably 1.0 to 4.0 dl/g. If the intrinsic viscosity is below 0.8 dl/g, the roll processability becomes poor due to low molecular weight, and if it exceeds 5.0 dl/g, the kneading properties and processability (roll, callender, extrusion, etc.) become poor.

The intrinsic viscosity is measured in xylene at 70°C by means of the known three points method.

In the present invention, the Q value measured by GPC and the peak characteristic numbers obtained from a molecular weight distribution curve are important factors to judge the processability of the EPR.

In the present invention, GPC means Gel Pearmiation Chromatography, the Q value means the ratio of the weight average molecular weight (MW) and number average molecular weight (MN), and it is represented by the equation Q = MW/MN. The large or small of Q value means a wide or narrow of molecular weight distribution.

Determination condition of GPC is as follows.

| | |
|---|---|
| GPC: | Type 150 C, mfd. by Waters Co. |
| Column: | Shodex® 80MA, mfd. by Showa Denko Co. |
| Amount of sample: | 300 $\mu\ell$ (polymer conc.; 0.2 wt %) |
| Flow rate: | 1 ml/min. |
| Temperature: | 135°C |
| Solvent: | Trichlorobenzene |

The calibration curve-war made in a usual manner using a standard polystyrene mfd. by Toyo Soda Co. The data treatment was carried out by Data Processer CP-8 model III mfd. by Toyo Soda Co.

The most important point of the present invention resides in that the Q value measured by GPC is 4 to 20, preferably 5 to 20; the following peak characteristics should be satisfied; the peak characteristic numbers I, A(i) and A(M) obtained from the molecular weight distribution curve are within the range of A(i)-<A(M), I ≧ 2, preferably 2 ≦ I ≦ 4, A(I) being within the range of 1.5 ≦ A(I) ≦ 3. In a more preferred embodiment I = 2 and 1.7 ≦ A(I) ≦ 2.7.

When the Q value is less than 4, the processability is poor, and when the a value exceeds 20, the processability and physical properties are deteriorated owing to the presence of a very low molecular weight portion and a very high molecular weight portion, respectively.

When the amount of peaks which is one of the characteristic numbers obtained from the molecular weight distribution curve in the present invention is I < 2, the processability is poor since the low molecular weight portion content is low. If A(I) < 1.5, physical properties are deteriorated owing to the low content of low molecuar weight portion and if A(I) > 3.0, no improvement effect of processability is seen owing to the high content of low molecular weight portion.

The peak characteristic numbers A(M), I, and A(i) obtained from molecular weight distribution curve are defined as follows:

The logarithm of the chain length giving the main peak of the molecular weight distribution curve is referred to as A(M). In the figures as attached depicting molecular weight distribution curve, the abscissa means the logarithm of the chain length in terms of polystyrene [log (chain length)], the ordinate means the relative concentration (H) of copolymer having a specific molecular chain length. The differentiation of said H is defined by the following equation:

$$\frac{dH}{d\ [log\ (chain\ length)]}$$

The differential value thus obtained is plotted on the ordinate, and the logarithm of the chain length is plotted on the abszissa, so that there is obtained a differential curve of the molecular weight distribution curve.

The equation

$$\frac{dH}{d\ [log\ (chain\ length)]}$$

is expressed by DH, the peak being DH > 0 is characterized by Pi, and the logarithm of the chain length showing the peak is characterized as A(i).

Namely, starting from the smaller numbers, the log (chain length) is shown as A(l), A(2), ..... A(i) corresponding to peak $P_1$, $P_2$, ..... $P_i$, provided that $P_i$ is within the range of A(i) < A(M). In order to make the explanation with ease, these relations are shown in Table 3. The thus obtained maximum value of i, i.e. the maximum number of peaks A(i), is expressed as I.

EPR of the present invention can be produced, for example, by copolymerizing ethylene and an $\alpha$-olefin having 3 to 6 carbon atoms and in the presence or absence of a non-conjugated polyene compound, in the presence of an organo aluminum compound represented by the general formula (I)

$$R'_m\ AlX_{3-m} \qquad (I)$$

wherein R' represents an alkyl having 1 to 10 carbon atoms, aryl, alalkyl, alkylaryl, cycloalkyl or alkoxyl group, X represents a halogen atom, and m is a real number of $3 \geq m \geq 0$, and a vanadic acid ester represented by the general formula (II)

$$VO(OR)_nX_{3-n} \qquad (II)$$

wherein OR represents a secondary alcohol moiety, X reprsents a halogen atom and n represents a real number of $3 \geq n > 0$.

One example of the method for producing the above-mentioned EPR is mentioned below:

An organo aluminum compound which is one component of the catalyst used in the present invention is represented by the above-mentioned general formula (I), and in the formula, R' represents an alkyl having 1 to 10 carbon atoms, aryl, alalkyl, alkylaryl, cycloalkyl or alkoxyl group, among which an alkyl group having 1 to 8 carbon atoms is preferred; X represents a halogen atom such as chlorine, bromine and iodine, among which chlorine is specifically preferred; and m represents a real number satisfying $3 \geq m > 0$, preferably $3 \geq m > 1$.

4

As the above-mentioned organo aluminum compound, there are exemplified preferably trialkylaluminum, dialkylaluminum halide, alkylaluminum sesquihalide, and alkylaluminum dihalide, among which alkylaluminum sesquichloride is particularly preferred. Actually, there may be illustrated trihexylaluminum, diethylaluminum chloride, dibutylaluminum chloride, ethylaluminum sesquichloride, butylaluminum sesquichloride, ethylaluminum dichloride and butylaluminum dichloride. These may be used alone or in combination.

The vanadic acid ester represented by the general formula (II), which is another component of the catalyst used, may be synthesized, for example, by reacting $VOCl_3$ with a secondary alcohol, and the product may be used after being separated from the reaction mixture, or as it is without being separated from the reaction mixture. In the latter case, it is preferable to remove the hydrogen halide which was formed during the reaction e.g. by inert gas. Vanadic acid ester alone or in mixture with vanadyl trichloride may be used.

For example, the reaction is shown in the equation (III) below. When vanadic acid ester, $VO(OR)_3$ is mixed with vanadyl trichloride, $VOCl_3$, both compounds are merely mixed in a preparation tank or a pipe line just before use and sent to a reactor, and thus, a sufficient effect can be obtained.

$$\frac{n}{3} \, VO(OR)_3 + \frac{3-n}{3} \, VOCl_3 \rightarrow VO(OR)_n Cl_{3-n} \quad (III)$$

Preferred secondary alcohols are those having 3 to 20 carbon atoms, and those with 3 to 12 carbon atoms are more preferred. Specific examples for such secondary alcohols include 2-propanol, 2-butanol, 2-phentanol-, 2-hexanol, 2-heptanol, 2-decanol, etc.

As the halogen atom in the above-mentioned general formula (II), chlorine or bromine is preferred, and chlorine is most preferred.

The ratio of the organo aluminum compound and the vanadic acid ester may be varied widely when n in the general formula (II) is within a range of $3 \geq n > 0$. In general, the ratio is preferably within a range of 2 to 20 in terms of Al/V (atomic ratio), more preferably within a range of 3 to 10. When the Al/V ratio is less than 2, there occurs no normal reaction, so that the formation of polymer is very small or a gel like polymer may be formed. When the Al/V ratio exceeds 20, the catalyst is still effective, but if the ratio becomes too high the reduction activity of the organoaluminum compound becomes too high, so that the active life of the catalyst becomes short and other troubles may occur due to a decrease of the catalyst efficiency.

The polymerization by using catalyst components according to the method of this invention is carried out in the form of solution polymerization by using a hydrocarbon or halogenated hydrocarbon solvents, which are generally used, for example, hexane, heptane, kerosene, cyclohexane, benzene, chloroform, trichloroethylene and tetrachloroethane. Further, a suspension polymerization may be carried out by using a solvent which is incapable of dissolving polymers, for example, propylene, 1,2-dichloroethane and methylenechloride.

The polymerization temperature may be varied in a wide range, but in general, it is usually -50 to 100°C, preferably -30 to 80°C, more preferred 30 to 80°C. The polymerization is carried out under atmospheric pressure or under pressure, and it is preferably carried out under a pressure of 9.81 to 490.5 $N/cm^2$ (1 to 50 $kg/cm^2$).

In order to optionally control the molecular weight of formed polymer in the method of the present invention, a molecular weight regulator as usually used may be used. As the molecular weight regulator, there may be used diethyl amine, allylchloride, pyridine-N-oxide, hydrogen, etc. . Hydrogen is particularly preferred.

The EPR of this invention can be used alone or as a blend with other EPR rubbers, synthetic rubbers or natural rubbers e.g. other EPR rubbers conventional in the field where conventional vulcanizable rubbers are used.

The fields where the vulcanizable rubbers comprising EPR according to the present invention can be used are for example in automobile parts such as in sponges, weather strips, hoses and channel rubbers; furthermore, in construction materials such as electric wires, sheets and gaskets; and in industrial parts such as belts, tubes and sealing materials.

The present invention will be explained in more detail below with reference to the Examples, but the invention is not limited thereto.

Example 1

From the bottom of an autoclave made of stainless steel (10 liter capacity) provided with a stirrer, there were continuously provided 4.5 kg/hr of hexane, 0.29 kg/hr of ethylene, 0.9 kg/hr of propylene, and 0.056 kg/hr of 5-ethylidiene-2-norbornene (ENB), 0.035 mole %/hr of hydrogen and as a catalyst, 0.027 mol/hr of ethylaluminum sesquichloride and 0.0027 mol/hr of triisopropoxyvanadate. Polymerization temperature was 55°C.

The reaction solution was continuously withdrawn, and after adding a polymerization terminator thereto, it was subjected to steam stripping to separate the polymer formed,which was then dried.

Thus, 330 g/hr of copolymer was obtained. The copolymer had a 73 mol % ethylene content, 7.8 wt % of ENB and an intrinsic viscosity of 1.31.

The Q value of the molecular weight distribution measured by GPC of the polymer was 9.8 , and the peak characteristic numbers were I = 2, and A(l) = 2.3.

The copolymer was subjected to an evaluation test for extrusion processability with the formulation A and extrusion condition A by the method as defined in ASTM-D-2230-B as shown later.The results of this evaluation was A-10 and the extrusion surface and the edges were good. The composition of formulation A was vulcanized at 160°C for 30 minutes by press-heating, and the resulting vulcanizate gave the physical properties shown below: (measured according to JIS K6301).

| Breaking strength | $588.6 \ N/cm^2$ ($60 \ kgf/cm^2$) |
| Elongation at break | 430% |

Example 2

As vanadium catalyst, there was used a mixture of vanadyl chloride ($VOCl_3$) and triisopropoxyvanadate (2/1 molar ratio). There were continuously provided into the same autoclave as in Example 1, 8.5 kg/hr of hexane, 0.38 kg/hr of ethylene, 1.38 kg/hr of propylene, 0.056 kg/hr of ENB, 0.009 mol % of hydrogen, 0.0175 mol of ethylaluminum sesquichloride and 0.005 mol/hr of a vanadium catalyst. polymerization temperature was 50°C. The withdrawal of polymerization liquid and the post-treatment were carried out in the same manner as in Example 1. 490 g/hr of copolymer was obtained. The copolymer thus obtained had a 68 mol % ethylene content, 7.4 wt % of ENB, an intrinsic viscosity of 2.11 and a Mooney viscosity of $ML_{1+4}$ 100°C = 101.

The Q value of molecular weight distribution as measured by GPC of the copolymer was 8.5 and the peak characteristic numbers were I = 2, and A(l) = 2.2.

The copolymer was subjected to an evaluation test for extrusion processability with the formulation B and extrusion condition B. The result of this evaluation test was A-10 and the extrusion surface and the edges were good.

The copolymer was extruded in a rate of 1 m/sec and the resulting product was vulcanized at 250°C by hot air for 3.5 minutes to obtain a good sponge having a density of 0.52.

Comparative Example 1

The same procedure was conducted as in Example 1, except that a mixture of vanadyl chloride ($VOCl_3$) and trinormal butylvanadate [$VO(n-Bu)_3$] (2/1 molar ratio) was used as a catalyst. Thus, there was obtained 310 g/hr of copolymer having 74 mol % of ethylene content, 7.9 wt % of ENB, an intrinsic viscosity of 1.38 and a Mooney viscosity of $ML_{1+4}$ 100°C = 34.

The copolymer had a Q value of molecular weight distribution of 11.3 as measured by GPC and the peak characteristic numbers were I = 1 and A(l) = 3.1.

The copolymer was subjected to an evaluation test for extrusion processability in the same manner as in Example 1. The result of the evaluation was B-8 (inferior to Example 1 in both extrusion surface and edges).

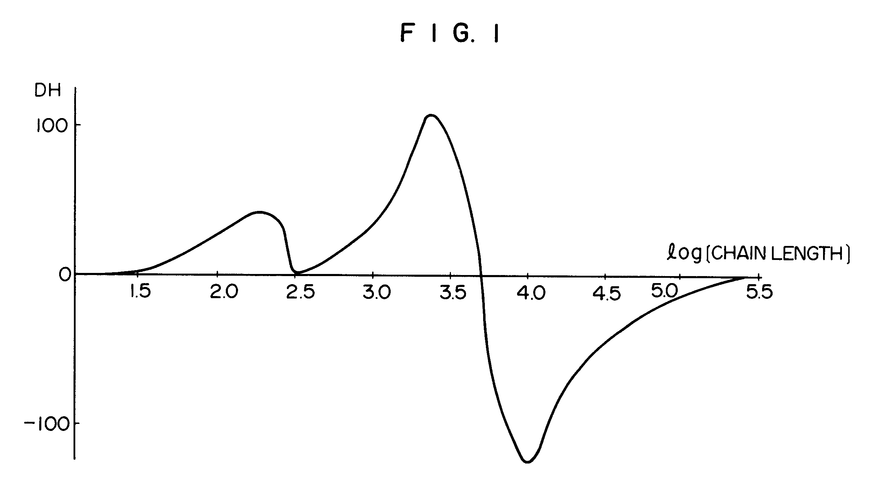

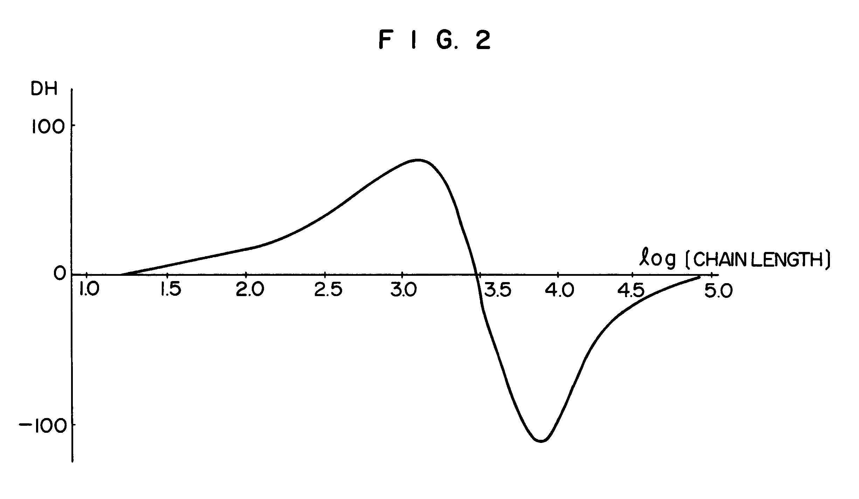

In Figs. 1 and 2, there is a differential curve of the molecular weight distribution curve of the copolymer obtained in Example 1 and in the Comparative Example 1, respectively.

Method for evaluation test of Extrusion Processability:

The method for evaluation test conducted in Examples 1 and 2 and Comparative Example 1 was carried out by the method according to ASTM-D-2230-B using ASTM Garvey Die under the following definitions:

| Formulation A: | |
|---|---|
| Copolymer | 100 parts by wt. |
| Talc | 50 |
| Paraffinic oil | 5 |
| ZnO | 5 |
| Stearic acid | 1 |
| Dicumylperoxide | 2.7 |
| Bismaleimide | 0.5 |

| Extrusion condition A: | |
|---|---|
| Cylinder size | 45 mm$\phi$ |
| Head temperature | 90°C |
| Cylinder temperature | 70°C |
| Extrusion speed | 80 rpm |

| Formulation B: | |
|---|---|
| Copolymer | 100 parts by wt. |
| Carbon black | 80 |
| Paraffinic oil | 65 |
| ZnO | 5 |
| Stearic acid | 1 |
| Soxinol® BZ | 2.0 |
| Soxinol® TRA | 1.0 |
| Soxinol® M | 1.5 |
| Sulfur | 1.5 |
| Selogen® OT | 3.0 |

| Extrusion condition B: | |
|---|---|
| Cylinder size | 45 m$\phi$ |
| Head temperature | 90°C |
| Cylinder temperature | 90°C |
| Extrusion speed | 60 rpm |

| Evaluation: | |
|---|---|
| Surface | A - F (Good - Bad) |
| Edge | 10 - 1 (Good - Bad) |

As explaned above, according to the present invention, there are provided ethylene-$\alpha$-olefin copolymer rubbers having excellent processability and physical properties as compared with the conventional ones.

**Claims**

1. Ethylene-α-olefin copolymer rubber comprising ethylene and α-olefin having 3 to 6 carbon atoms, or ethylene, α-olefin having 3 to 6 carbon atoms and a non-conjugated polyene, the molar ratio of ethylene/α-olefin being 40/60 to 95/5, the content of non-conjugated polyene being 0 to 25% by weight, the intrinsic viscosity as measured in xylene at 70°C being 0.8 to 5.0 dl/g, the Q value (weight average molecular weight/number average molecular weight) being 4 to 20, and the peak characteristic numbers I, A(i) and A(M) obtained from a molecular weight distribution curve being

   A(i)<A(M), I ≧ 2 and 1.5 ≦ A(1) ≦ 3.0

2. The ethylene-α-olefin copolymer rubber according to Claim 1, wherein the α-olefin is propylene, the molar ratio of ethylene/propylene is 40/60 to 85/15.

3. The ethylene-α-olefin copolymer rubber according to Claim 1, wherein the α-olefin is 1-butene, and the molar ratio of ethylene/1-butene is 65/35 to 95/5.

4. The ethylene-α-olefin copolymer rubber according to Claim 1, wherein the non-conjugated polyene is 5-ethylidene-2-norbornene, dicyclopentadiene, or 1,4-hexadiene.

**Patentansprüche**

1. Ethylen-α-Olefin-Copolymer-Kautschuk, umfassend Ethylen und ein α-Olefin mit 3 bis 6 Kohlenstoffatomen, oder Ethylen, ein α-Olefin mit 3 bis 6 Kohlenstoffatomen und ein nicht-konjugiertes Polyen, wobei das molare Verhältnis von Ethylen/α-Olefin 40/60 bis 95/5 ist, der Gehalt an nicht-konjugiertem Polyen von 0 bis 25 Gew.-% ist, und die Grenzviskositätszahl, gemessen in Xylol bei 70°C, 0,8 bis 5,0 dl/g ist, der Q-Wert (Gewichtsmittel des Molekulargewichts/Zahlenmittel des Molekulargewichts) 4 bis 20 ist, und die Peak-charakteristischen Zahlen I, A(i) und A(M) ,die aus einer Molekulargewichtsverteilungskurve erhalten werden, die Beziehung erfüllen:

   A(i)<A(M), I ≧ 2 und 1,5 ≦ A(1) ≦ 3,0.

2. Ethylen-α-Olefin-Copolymer-Kautschuk nach Anspruch 1, wobei das α-Olefin Propylen ist und das molare Verhältnis von Ethylen/Propylen 40/60 bis 85/15 beträgt.

3. Ethylen-α-Olefin-Copolymer-Kautschuk nach Anspruch 1, wobei das α-Olefin 1-Buten ist und das molare Verhältnis von Ethylen/1-Buten 65/35 bis 95/5 beträgt.

4. Ethylen-α-Olefin-copolymer-Kautschuk nach Anspruch 1, wobei das nicht-konjugierte Polyen 5-Ethyliden-2-norbornen, Dicyclopentadien oder 1,4-Hexadien ist.

**Revendications**

1. Caoutchouc de copolymère éthylène/α-oléfine comprenant de l'éthylène et une α-oléfine ayant de 3 à 6 atomes de carbone, ou de l'éthylène, une α-oléfine de 3 à 6 atomes de carbone et un polyène non conjugué, le rapport molaire éthylène/α-oléfine étant de 40/60 à 95/5, la teneur en polyène non conjugué étant de 0 à 25% en poids, la viscosité intrinsèque mesurée dans le xylène à 70°C étant de 0,8 à 5,0 dl/g, la valeur Q (poids moléculaire moyen en poids/poids moléculaire moyen en nombre) étant de 4 à 20, et les nombres caractéristiques des pics I, A(i) et A(M) obtenus à partir d'une courbe de distribution du poids moléculaire étant

   A(i)<A(M), I ≧ 2 et 1,5 ≦ A(1) ≦ 3,0.

2. Caoutchouc de copolymère éthylène/α-oléfine selon la revendication 1, dans lequel l'α-oléfine est le propylène, le rapport molaire éthylène/propylène est de 40/60 à 85/15.

3. Caoutchouc de copolymère éthylène/α-oléfine selon la revendication 1, dans lequel l'α-oléfine est le 1-butène et le rapport molaire éthylène/1-butène est de 65/35 à 95/5.

8

4. Caoutchouc de copolymère éthylène/α-oléfine selon la revendication 1, dans lequel le polyène non conjugué est le 5-éthylidène-2-norbornène, le dicyclopentadiène et le 1,4-hexadiène.

F I G. I

F I G. 2

EP 0 235 381 B1

F I G. 3

EP 0 235 381 B1